# EUROPÄISCHE PATENTSCHRIFT

(11) **EP 0 862 525 B1**
(45) Veröffentlichungstag und Bekanntmachung des Hinweises auf die Patenterteilung: **31.07.2002**
(21) Anmeldenummer: 97911195.2
(22) Anmeldetag: 08.10.1997
(51) Int. Cl.: B60T 7/04, B60T 7/12

(54) **BREMSVORRICHTUNG EINES FAHRZEUGS MIT BREMSSTEUERSYSTEM SOWIE VERFAHREN ZU DEREN BETRIEB**
VEHICLE BRAKING DEVICE
DISPOSITIF DE FREINAGE D'UN VEHICULE

(30) Priorität: 09.10.1996 DE 19641469; 09.10.1996 DE 19641470
(43) Veröffentlichungstag der Anmeldung: 09.09.1998
(73) Patentinhaber: Lüpges, Peter, 41238 Mönchengladbach (DE); Wagels, Dieter, 52511 Geilenkirchen (DE)
(72) Erfinder: Lüpges, Peter, 41238 Mönchengladbach (DE); Wagels, Dieter, 52511 Geilenkirchen (DE)
(74) Vertreter: Schulte, Jörg, Dipl.-Ing.
(86) Internationale Anmeldenummer: EP9705528
(87) Internationale Veröffentlichungsnummer: WO9815441

(56) Entgegenhaltungen:
- WO-A-95/01898
- DE-A- 19 609 742
- DE-U- 9 110 739
- US-A- 4 146 108

## Beschreibung

Die Erfindung betrifft eine Bremsvorrichtung eines ein Gaspedal sowie ein Bremspedal aufweisenden Fahrzeugs, mit einem Bremssteuersystem zum automatischen Auslösen eines Bremsvorgangs in Abhängigkeit von einem mit Hilfe einer Erfassungseinrichtung ermittelten Überschreiten einer vorgegebenen Mindestgeschwindigkeit der Bewegung des Fahrerfußes, wobei die Erfassungseinrichtung einen im Bereich zwischen Gas- und Bremspedal positionierten ersten Sensor zum Erfassen des Fahrerfußes aufweist.

In WO 95/01898 wird eine Bremsvorrichtung eingangs genannter Art beschrieben, die den Bremsvorgang automatisch auslöst, wenn folgende Und-Bedingungen erfüllt sind: Der Fahrerfuß wird erstens mit vorgegebener Mindestgeschwindigkeit vom (vorher getretenen) Gaspedal abgehoben und zweitens ebenfalls mit vorgegebener Mindestgeschwindigkeit, das heißt, innerhalb einer bestimmten vorgegebenen Zeit, nach dem Abheben vom Gaspedal, in Richtung auf das Bremspedal bewegt. Die Bremsung beginnt in diesem Fall bereits automatisch, bevor der Fuß das Bremspedal erreicht. In einer weiteren Ausgestaltung wird die automatische Bremsung nur so lange fortgesetzt, bis der Fahrerfuß normalerweise das Bremspedal erreicht und eingetreten hätte/hat. Die Funktion der bekannten Bremsvorrichtung setzt allerdings voraus, daß der Fahrerfuß vorher das Gaspedal eingedrückt hatte. Bei einem Fahrzeug mit eingeschaltetem Geschwindigkeitsautomaten bleibt das bekannte Bremssystem wirkungslos, weil die erste der obigen Und-Bedingungen fehlt. Ein (auch als Tempomat bezeichneter) Geschwindigkeitsautomat ist eine Schaltvorrichtung, die es erlaubt, eine feste Fahrzeuggeschwindigkeit einzustellen und ohne Treten des Gaspedals aufrechtzuerhalten, bis das Gas- oder Bremspedal wieder betätigt wird.

Der Erfindung liegt die Aufgabe zugrunde, ein Bremssystem mit automatisch einsetzender Bremsung zu schaffen, das auch bei eingeschaltetem Geschwindigkeitsautomaten arbeitet und in einem Notfall, bei dem der für das Bremsen zuständige Fahrerfuß eine panisch schnelle Bewegung in Richtung auf das Bremspedal ausführt, ohne unmittelbar zuvor das Gaspedal berührt zu haben, eine automatische Bremsung auslöst.

Diese Aufgabe wird erfindungsgemäß dadurch gelöst, der erste Sensor ein vom Fahrerfuß auf dessen Weg vom Fuß-Abstellplatz zum Bremspedal zu kreuzendes Blickfeld und in dem Blickfeld mit der Erfassungseinrichtung gekoppelte Mittel zum Messen der Geschwindigkeit einer Fahrerfußbewegung in Richtung auf das Bremspedal besitzt. Unter dem "Blickfeld" des ersten Sensors wird im Rahmen der Erfindung der vom aktivierten Sensor kontrollierte bzw. überblickte Raum, auch Prüffeld oder Sensorfeld genannt, verstanden. In einem einfachen Fall wird der erste Sensor als Bewegungsmelder ausgebildet.

Eine vorteilhafte Weiterbildung des Erfindungsgegenstandes sieht vor, daß das Blickfeld eine erste Meßposition umfaßt, daß an einer zweiten Meßposition ein zweiter, mit der Erfassungseinrichtung gekoppelter Sensor, vorzugsweise ein Geschwindigkeitssensor, vorgesehen ist und daß die Erfassungseinrichtung Mittel zum Messen der Zeitdauer bzw. der Geschwindigkeit einer Bewegung des Fahrerfußes von der ersten zur zweiten Meßposition aufweist. Die zweite Meßposition ist dabei vorzugsweise am Bremspedal vorgesehen.

Eine weitere vorteilhafte Ausgestaltung der Erfindung besteht darin, daß Mittel zum Ermittteln einer Betätigungsgeschwindigkeit bzw. -kraft des Bremspedals vorgesehen sind, wobei während eines Bremsmanövers der automatische Bremsvorgang dann ausgelöst wird, wenn die Betätigungsgeschwindigkeit bzw. -kraft des Bremspedals einen vorgegebenen Schwellenwert übersteigt. Dabei ist es besonders sinnvoll, wenn dem Bremspedal und/oder einer durch das Pedal zu betätigenden Bremseinrichtung ein Kraftsensor, insbesondere ein Druckschalter, als Meßmittel zum Erfassen der am Bremspedal wirkenden Betätigungskraft zugeordnet ist.

Als zweiter Sensor kann vorzugsweise ein mit der Erfassungseinrichtung gekoppelter Bremslichtschalter oder ein anderer Schalter oder Fühler vorgesehen werden. Grundsätzlich können aber die erste und die zweite Meßposition auch von dem ersten Sensor allein kontrolliert werden. Das gilt beispielsweise dann, wenn der erste Sensor als ein Rastersensor, eine Kamera oder änlicher Geschwindigkeitsmelder, beispielsweise ein Radarfühler, ausgebildet ist.

Wegen der Automatik beim Bremsen setzt das erfindungsgemäße System im allgemeinen eine Ausrüstung des Fahrzeugs mit ABS oder dergleichen Schutzeinrichtungen voraus. Durch die Erfindung wird erreicht, daß die automatische Bremsung in einem Notfall, das heißt bei einer Panikbewegung des Fahrerfußes, in Richtung Bremspedal auch dann ausgelöst wird, wenn der Fahrerfuß unmittelbar vorher das Gaspedal gar nicht berührt hatte. Insbesondere ist die Erfindung dann bevorzugt anzuwenden, wenn das Fahrzeug mit einem Geschwindigkeitsautomaten ausgerüstet ist. In diesem Fall kann der erste Sensor vorzugsweise dadurch Einschalten des Geschwindigkeitsautomaten aktiviert werden. Grundsätzlich kann aber der erste Sensor immer dann aktiviert sein, wenn der Fuß das Gaspedal nicht oder nicht mehr berührt.

Das Auslösen des automatischen Bremsvorgangs durch eine Panikbewegung des das Gas- bzw. das Bremspedal betätigenden Fahrerfußes, läßt sich einerseits nach WO 95/01898 gemäß obigen Und-Bedingungen (schnelles Verlassen des Gaspedals und schnelle Bewegung in Richtung Bremspedal) und andererseits - nämlich erfindungsgemäß - allein durch den ersten Sensor bzw. in Kombination von erstem und zweitem Sensor erreichen. Bei der bekannten Bremsvorrichtung gemäß WO 95/01898 wird die Bremsung zwar im Prinzip bereits beim Ermitteln der Fußbewegung mittels eines zwischen Gas- und Bremspedal angeordneten (dritten) Sensors ausgelöst. Nach der Erfindung beginnt die automatische Bremsung in der Regel etwas später, aber ebenfalls noch bevor der Fahrerfuß zeitlich in der Lage ist, das Bremspedal durchzutreten. Soll der erste Sensor die Geschwindigkeit des Fahrerfußes selbst feststellen, kann auch im Rahmen der Erfindung die automatische Bremsung bereits einsetzen, bevor der Fahrerfuß das Bremspedal überhaupt berührt.

Ein wesentlicher Gedanke der vorliegenden Erfindung besteht, wie bereits angedeutet, darin, daß im Fußraum des Fahrzeugs, um das Bremspedal herum, ein Blickfeld des ersten Sensors eingerichtet wird, das (unmittelbar oder mit Hilfe des zweiten Sensors) in der Lage ist, eine schnelle Bewegung des Fahrerfußes von irgendeinem üblichen Abstellplatz in Richtung Bremspedal zu erfassen. Wenn dabei, in Panik, eine Bewegung mit vorgegebener Mindestgeschwindigkeit ausgeführt und ermittelt wird, soll die auf den Sensor bzw. die Sensoren angeschlossene Erfassungseinrichtung automatisch einen entsprechenden Befehl an das Bremssteuersystem geben, das augenblicklich und selbsttätig eine Fahrzeugbremsung, speziell eine Vollbremsung über ABS, veranlassen soll. Im Rahmen der Erfindung kann die Dauer der automatischen Bremsung auf die Zeit beschränkt werden, die der schnell bewegte Fuß normalerweise gebraucht haben würde, um die Vollbremsung selbst durch Eintreten des Bremspedals zu erreichen. Es kann sich hierbei um Zeiten in der Größenordnung von 1/10 bis ½ Sekunde handeln.

Schließlich ist im Rahmen der vorliegenden Erfindung eine weitere Ausführungsvariante denkbar, bei der der erste Sensor nach einer vorbestimmbaren Zeitdauer automatisch aktiviert wird. Die Erfassung der vorbestimmbaren Zeitdauer beginnt dann vorzugsweise mit dem Loslösen des Fahrerfußes vom Gaspedal.

Ein Verfahren zum Betrieb der erfindungsgemäßen Bremsvorrichtung ist den Patentansprüchen 11 bis 13 zu entnehmen.

Es gibt, wie gesagt, zwei erfindungsgemäß bevorzugte Alternativen: Entweder kann der erste bzw. Geschwindigkeitssensor durch ein bestimmtes Raster, Radarsignal, Kameramessung oder dergleichen unmittelbar die Geschwindigkeit der Fußbewegung bestimmen, oder die Geschwindigkeit des Fahrerfußes wird durch den ersten Sensor gemeinsam mit einem weiteren Geschwindigkeitssensor bei entsprechenden Meldungen an die Erfassungseinrichtung automatisch berechnet. Durch diese der Berührung bzw. dem Betätigen des Bremspedals vorausgehende Fuß-Geschwindigkeitsbestimmung läßt sich das Bremssteuersystem - gewissermaßen "vorausschauend" - so aktivieren, daß es die sofortige Vollbremsung automatisch dann auslöst, wenn der Fahrerfuß innerhalb einer vorgegebenen Zeit nach der Aktivierung des Bremssteuersystems mit der vorgegebenen Kraft auf die Bremse tritt. Diese Lehre umfaßt auch den Fall, bei dem der Fahrerfuß nach ursprünglich panisch schneller Bewegung zum Bremspedal zunächst verhalten zu bremsen beginnt und erst danach - noch innerhalb der vorgegebenen Zeit - das Pedal mit vorgegebener Betätigungskraft betätigt.

Für das Einsetzen des automatischen Bremsvorgangs der eingangs definierten Art müssen erfindungsgemäß folgende drei Voraussetzungen erfüllt werden: Erstens muß der Fahrerfuß mit einer vorgegebenen Mindestgeschwindigkeit, der sogenannten Panik-Geschwindigkeit, die unter Zuhilfenahme des ersten Sensors gemessen wird, in Richtung Bremspedal bewegt worden sein. Zweitens muß das Bremspedal mit einer vorgegebenen Mindestkraft, der sogenannten Panik-Kraft, die am Bremspedal selbst z.B. mit Hilfe des vorhin erwähnten Drucksensors, gemessen wird, getreten werden. Drittens müssen die beiden Ereignisse innerhalb einer vorgegebenen Mindestzeitdauer, der sogenannten Panik-Zeit, stattfinden. Für das Einsetzen des automatischen Bremsvorgangs ist also eine Und-Bedingung mit drei Komponenten, Panik-Geschwindigkeit, Panik-Kraft und Panik-Zeit zu erfüllen. Die Panik-Zeit wird nach Erfahrungswerten so bemessen, daß ein unmittelbarer Zusammenhang, das heißt eine unmittelbare Beziehung auf dasselbe Ereignis, vorauszusetzen ist.

Anhand der schematischen Darstellung eines Ausführungsbeispiels werden Einzelheiten der Erfindung erläutert.

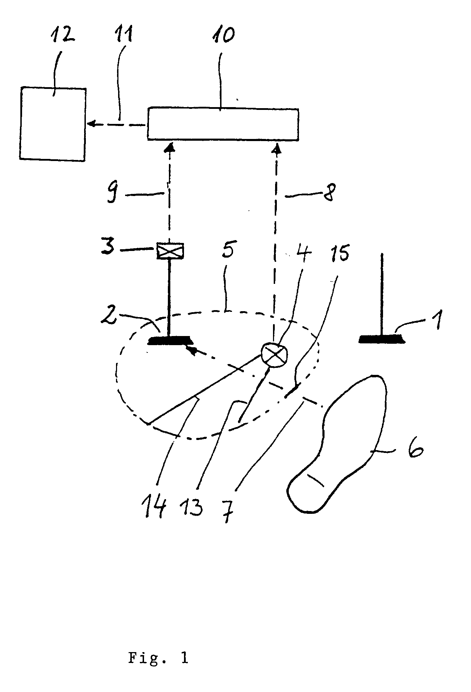

In der beiliegenden Zeichnung wird der Fahrer-Fußraum in einem Kraftwagen, insbesondere PKW, schematisch dargestellt. Im Fußraum befinden sich unter anderem ein Gaspedal 1 und ein Bremspedal 2. Zum Bremspedal 2 gehört im Allgemeinen ein Bremslichtschalter 3 oder ein Kraftsensor, ggf. ein Druckschalter, mit dessen Hilfe die auf das Bremspedal 2 mit dem Fahrerfuß ausgeübte Betätigungskraft gemessen werden kann. Im Bereich zwischen Gaspedal 1 und Bremspedal 2 ist ein erster Sensor bzw. ein Geschwindigkeitssensor 4 angeordnet. Der erste Sensor 4 besitzt ein Blickfeld 5, in dem er jede Bewegung registriert. Der erste Sensor 4 kann beispielsweise ständig aktiviert - das heißt empfangsbereit - sein, durch Einschalten eines Geschwindigkeitsautomaten aktiviert und/oder dadurch eingeschaltet werden, das der Fahrerfuß 6 das Gaspedal 1 verläßt.

Erfindungsgemäß wird das Blickfeld 5 des ersten Sensors 4 so auf den Bereich zwischen Gaspedal 1 und Bremspedal 2 am bzw. um das Bremspedal 2 herum gerichtet, daß der von irgendeinem üblichen Abstellplatz in Richtung Bremspedal 2 bewegte Fahrerfuß 6 das Blickfeld 5 auf seinem Weg 7 kreuzen bzw. berühren muß. Der erste Sensor 4 wird über eine Leitung 8 und gegebenenfalls der Bremslichtschalter bzw. der Druckschalter 3 über eine Leitung 9 mit der Erfassungseinrichtung 10 gekoppelt. Letztere wird über eine Leitung 11 mit einem Bremssteuersystem 12 verbunden, das die Fahrzeugbremsung auslöst. Diese automatische Bremsung beginnt unabhängig davon, ob der Fahrerfuß 6 das Bremspedal 2 tritt oder nicht.

Wenn der Fahrerfuß 6 in einer Notsituation längs des Weges 7 panisch in Richtung Bremspedal 2 bewegt wird, tritt er notwendig in das Blickfeld 5 des ersten Sensors 4 ein. Der Moment des Eintritts in das Blickfeld 5 kann erfindungsgemäß durch den ersten Sensor 4 registriert und über die Leitung 8 an die Erfassungseinrichtung 10 gemeldet werden. Wenn es sich bei dem ersten Sensor 4 um einen Rastersensor oder dergleichen Fühler handelt, der eine Bewegung nicht nur registrieren, sondern auch die Geschwindigkeit, beispielsweise in einem mit den Linien 13 und 14 angedeuteten Raster unmittelbar messen kann, meldet der erste Sensor 4 über die Leitung 8 auch die Geschwindigkeit, mit der sich der Fuß 6 in Richtung Bremspedal 2 bewegt. Beispielsweise kann die Zeit gemessen werden, die der Fuß 6 von der Eintrittslinie 15 in das Blickfeld 5 bis zum Überschreiten einer ersten Rasterlinie 13 braucht. Wenn die dabei ermittelte Geschwindigkeit einen vorgegebenen Mindestwert überschreitet, soll die über die Leitung 8 informierte Erfassungseinrichtung 10 über die Leitung 11 einen Befehl an das Bremssteuersystem 12 auslösen, sofort automatisch eine Bremsung des Fahrzeugs zu veranlassen.

Die Aktivierung des Bremssteuersystems allein führt bei einer zweiten Variante des Erfindung allerdings noch nicht zur automatischen Bremsung. Diese wird durch das Bremssteuersystem vielmehr erst dann ausgelöst, wenn außerdem der Druckschalter 3 innerhalb der Panik-Zeit (über die Leitung 9) meldet, daß das Bremspedal 2 mit der Panik-Kraft getreten wird. Es wird dann durch das Bremssteuersystem 12 automatisch ein Bremsvorgang mit größerem Bremsdruck als entsprechend der Bremspedalstellung ausgelöst. Die automatische Bremsung endet erst, wenn das Fahrzeug steht oder wenn der Fahrer den Bremsdruck - unter den der Panik-Kraft entsprechenden Wert - lockert.

Der Moment des Eintritts des in Panik bewegten Fahrerfußes 6 in das Blickfeld 5 des ersten Sensors 4 wird im Ausführungsbeispiel durch diesen Sensor registriert und über eine Leitung 8 an die Erfassungseinrichtung 10 gemeldet. Wenn es sich bei dem ersten Sensor 4 um einen Rastersensor oder dergleichen Fühler handelt, der eine Bewegung nicht nur registrieren, sondern auch die Geschwindigkeit der Bewegung, beispielsweise in einem mit den Linien 13 und 14 angedeuteten Raster, unmittelbar messen kann, meldet der erste Sensor 4 über die Leitung 8 auch die Geschwindigkeit, mit der sich der Fahrerfuß 6 in Richtung Bremspedal 2 bewegt. Beispielsweise kann die Zeit gemessen werden, die der Fahrerfuß 6 von der Eintrittslinie 15 in das Blickfeld 5 bis zum Überschreiten einer ersten Rasterlinie 13 braucht. Wenn die dabei ermittelte Geschwindigkeit einen vorgegebenen Schwellenbzw. Mindestwert überschreitet, soll die über die Leitung 8 informierte Erfassungseinrichtung 10 über die Leitung 11 das Bremssteuersystem 12 so aktivieren, daß es bei Ankunft eines von einer auf das Bremspedal 2 ausgeübten Panik-Kraft abhängigen, vom Druckschalter 3 ausgehenden zweiten Befehls über die Leitung 9 den eingangs definierten automatischen Bremsvorgang auslöst.

Wenn sich bei der beschriebenen unmittelbaren Messung der Fahrerfußgeschwindigkeit durch den ersten Sensor 4 ergibt, daß die zunächst registrierte Panikgeschwindigkeit zwischen den Rasterlinien 15 und 13 nicht aufrecht erhalten wird, also beispielsweise an der nächsten Rasterlinie 14 eine geringere Geschwindigkeit als die Mindestgeschwindigkeit gemessen wird, kann die automatische Bremsung über einen entsprechenden Befehl der Erfassungseinrichtung 10 bereits in diesem Moment unterbrochen werden.

In einer weiteren Alternative kann die Geschwindigkeit der Bewegung des Fahrerfußes 6 längs des Weges 7 zwischen zwei Meßpositionen, nämlich zwischen der Eintrittslinie 15 in das Blickfeld 5 und dem Bremspedal 2 selbst, gemessen werden. Die zweite Meßposition kann in diesem Fall vorzugsweise mit dem Bremslichtschalter 3 kombiniert werden. Die beiden Sensoren 4 und 3 geben dann über die Leitung 8 bzw. 9 ihre Meßergebnisse an die Erfassungseinrichtung 10 weiter, die feststellt, ob eine Mindestgeschwindigkeit überschritten ist, und veranlaßt, gegebenenfalls über die Leitung 11 die Aktivierung des Bremssteuersystems 12 als erste Voraussetzung für das Einsetzen des automatischen Bremsvorgangs.

In einer Bremsvorrichtung eines Kraftfahrzeugs mit Bremssteuersystem zum automatischen Auslösen des Bremsvorganges, abhängig von einer Panikbewegung des Fahrerfußes, läßt sich die automatische Bremsung auch unabhängig davon auslösen, ob vorher Gas gegeben wurde oder nicht. Zu diesem Zweck wird ein erster Sensor mit einem Blickfeld in den Weg des Fahrerfußes von seinem Abstellplatz zum Bremspedal gesetzt. Der erste Sensor soll Mittel zum unmittelbaren Messen der Geschwindigkeit der Bewegung des Fahrerfußes besitzen oder diese Geschwindigkeit wird durch Vergleich der Messung am ersten Sensor und an einem am Bremspedal plazierten zweiten Sensor bestimmt.

In einer Bremsvorrichtung eines Kraftfahrzeugs mit Bremssteuersystem zum automatischen Auslösen des Bremsvorgangs abhängig vom Treten des Bremspedals mit einer Panik-Kraft wird die Vollbremsung abhängig von einer vorgegebenen Mindestgeschwindigkeit der Bewegung des Fahrerfußes zum Bremspedal auch bei eingeschaltetem Geschwindigkeitsautomaten ausgelöst, wenn die Geschwindigkeit der Bewegung des Fahrerfußes mit Hilfe eines zwischen Gas- und Bremspedal angeordneten Geschwindigkeitssensors gemessen wird, dessen Blickfeld vom Fahrerfuß auf dessen Weg zum Bremspedal zu durchkreuzen ist. Die Bremsung selbst kann verhalten beginnen und trotzdem in den automatischen Bremsvorgang übergehen, wenn das Bremspedal innerhalb einer vorgegebenen Zeitdauer nach Eintritt des Fahrerfußes in das Blickfeld des ersten Sensors mit einer Panik-Kraft vorgegebener Mindestgröße getreten wird.

### Bezugszeichenliste

- 1 =: Gaspedal
- 2 =: Bremspedal
- 3 =: Bremslichtschalter
- 4 =: erster Sensor
- 5 =: Blickfeld (4)
- 6 =: Fahrerfuß
- 7 =: Weg (6)
- 8 =: Leitung (4)
- 9 =: Leitung (3)
- 10 =: Erfassungseinrichtung
- 11 =: Leitung
- 12 =: Bremssteuersystem
- 13,14 =: Rasterlinie
- 15 =: Eintrittslinie (5)

## Patentansprüche

1. Bremsvorrichtung eines ein Gaspedal (1) sowie ein Bremspedal (2) aufweisenden Fahrzeugs, mit einem Bremssteuersystem (12) zum automatischen Auslösen eines Bremsvorgangs in Abhängigkeit von einem mit Hilfe einer Erfassungseinrichtung (10) ermittelten Überschreiten einer vorgegebenen Mindestgeschwindigkeit der Bewegung des Fahrerfußes, wobei die Erfassungseinrichtung (10) einen im Bereich zwischen Gas- (1) und Bremspedal (2) positionierten ersten Sensor (4) zum Erfassen des Fahrerfußes (6) aufweist, **dadurch gekennzeichnet, daß** der erste Sensor (4) ein vom Fahrerfuß (6) auf dessen Weg (7) von einem Fuß-Abstellplatz zum Bremspedal (2) zu kreuzendes Blickfeld (5) und mit der Erfassungseinrichtung (10) gekoppelte Mittel (13 bis 15) zum unmittelbaren Messen der Geschwindigkeit einer Fahrerfußbewegung in Richtung Bremspedal (2) besitzt.

2. Bremsvorrichtung nach Anspruch 1 **dadurch gekennzeichnet, daß** das Blickfeld (5) eine erste Meßposition (15) umfaßt, daß an einer zweiten Meßposition ein zweiter, mit der Erfassungseinrichtung (10) gekoppelter Sensor (3), vorzugsweise ein Geschwindigkeitssensor, vorgesehen ist und daß die Erfassungseinrichtung (10) Mittel zum Messen der Zeitdauer bzw. der Geschwindigkeit einer Bewegung des Fahrerfußes (6) von der ersten zur zweiten Meßposition aufweist.

3. Bremsvorrichtung nach Anspruch 1 **dadurch gekennzeichnet, daß** Mittel zum Ermittteln einer Betätigungsgeschwindigkeit bzw. -kraft des Bremspedals (2) vorgesehen sind, wobei während eines Bremsmanövers der automatische Bremsvorgang dann ausgelöst wird, wenn die Betätigungsgeschwindigkeit bzw. -kraft des Bremspedals (2) einen vorgegebenen Schwellenwert übersteigt.

4. Bremsvorrichtung nach Anspruch 2 oder 3 **dadurch gekennzeichnet, daß** die zweite Meßposition am Bremspedal (2) vorgesehen ist.

5. Bremsvorrichtung nach Anspruch 3, **dadurch gekennzeichnet, daß** dem Bremspedal (2) und/oder einer durch das Pedal zu betätigenden Bremseinrichtung ein Kraftsensor, insbesondere ein Druckschalter, als Meßmittel zum Erfassen der am Bremspedal (2) wirkenden Betätigungskraft zugeordnet ist.

6. Bremsvorrichtung nach einem der Ansprüche 1 bis 5 **dadurch gekennzeichnet, daß** der erste Sensor (4) als Bewegungsmelder, Rastersensor, Kamera oder Radarfühler ausgebildet ist.

7. Bremsvorrichtung nach Anspruch 2, **dadurch gekennzeichnet, daß** der zweite Sensor (3) als ein mit dem Bremspedal (2) gekoppelter Bremslichtschalter ausgebildet ist.

8. Bremsvorrichtung nach einem der vorhergehenden Ansprüche **dadurch gekennzeichnet, daß** der erste Sensor (4) nach einer vorbestimmbaren Zeitdauer aktiviert wird.

9. Bremsvorrichtung nach Anspruch 8 **dadurch gekennzeichnet, daß** die Erfassung der vorbestimmbaren Zeitdauer mit dem Loslösen des Fahrerfußes vom Gaspedal beginnt.

10. Bremsvorrichtung nach mindestens einem der Ansprüche 1 bis 7, **dadurch gekennzeichnet, daß** der erste Sensor (4) und ein im Fahrzeug vorgesehener Geschwindigkeitsautomat im Sinne der Aktivierung des ersten Sensors (4) durch Einschalten des Automaten zu koppeln sind.

11. Verfahren zum Betrieb der Bremsvorrichtung nach mindestens einem der Ansprüche 1 bis 7 oder 10, **dadurch gekennzeichnet, daß** bei einem mit einem Geschwindigkeitsautomaten ausgestatteten Fahrzeug der erste Sensor (4) durch Einschalten des Automaten aktiviert wird.

12. Verfahren zum Betrieb der Bremsvorrichtung nach Anspruch 11, **dadurch gekennzeichnet, daß** ein automatischer Bremsvorgang mit größerem als der Bremspedalstellung entsprechenden Bremsdruck ausgelöst wird, wenn mit Hilfe des ersten (4) und gegebenenfalls eines weiteren Geschwindigkeitssensors eine vorgegebene Mindestgeschwindigkeit der Fahrerfußbewegung (Panik-Geschwindigkeit), und am Bremspedal (2) mit. Hilfe eines Kraftsensors (3) eine Betätigungskraft vorgegebener Mindestgröße (Panik-Kraft), innerhalb einer vorgegebenen Zeit (Panik-Zeit), zusammentreffen.

13. Verfahren nach Anspruch 12, **dadurch gekennzeichnet, daß** der automatische Bremsvorgang auch bei verhalten beginnendem Betätigen der Bremse ausgelöst wird, wenn innerhalb der vorgegebenen Zeit doch noch die Betätigungskraft vorgegebener Größe registriert wird.

## Claims

1. Braking device of a vehicle comprising an accelerator pedal (1) and a brake pedal (2), with a brake control system (12) for automatically triggering a braking procedure as a function of the exceeding of a predetermined minimum speed of the movement of the driver's foot determined with the aid of a detection device (10), the detection device (10) having a first sensor (4) positioned in the region between accelerator pedal (1) and brake pedal (2) for detection of the driver's foot (6), **characterised in that** the first sensor (4) has a field of vision (5) to be crossed by the driver's foot (6) on its path (7) from a foot rest to the brake pedal (2) and means (13 to 15) coupled to the detection device (10) for direct measurement of the speed of a movement of the driver's foot in the direction of the brake pedal (2).

2. Braking device according to claim 1, **characterised in that** the field of vision (5) comprises a first measuring position (15), **in that** a second sensor (3), preferably a speed sensor, coupled to the detection device (10) is provided at a second measuring position and **in that** the detection device (10) has means for measuring the duration or the speed of a movement of the driver's foot (6) from the first to the second measuring position.

3. Braking device according to claim 1, **characterised in that** means for detecting an actuation speed or force of the brake pedal (2) are provided, wherein the automatic braking procedure is triggered during a braking manoeuvre if the actuation speed or force of the brake pedal (2) exceeds a predetermined threshold value.

4. Braking device according to claim 2 or 3, **characterised in that** the second measuring position is provided on the brake pedal (2).

5. Braking device according to claim 3, **characterised in that** a force sensor, in particular a push switch, is associated with the brake pedal (2) and/or a braking device to be actuated by the pedal, as measuring means for detecting the actuation force acting on the brake pedal (2).

6. Braking device according to one of claims 1 to 5, **characterised in that** the first sensor (4) is designed as a motion detector, grid sensor, camera or radar sensor.

7. Braking device according to claim 2, **characterised in that** the second sensor (3) is designed as a brake light switch coupled to the brake pedal (2).

8. Braking device according to one of the preceding claims, **characterised in that** the first sensor (4) is activated after a predeterminable period of time.

9. Braking device according to claim 8, **characterised in that** detection of the predeterminable period of time begins with the removal of the driver's foot from the accelerator pedal.

10. Braking device according to at least one of claims 1 to 7, **characterised in that** the first sensor (4) and an automatic speed device provided in the vehicle are to be coupled in the sense of activating the first sensor (4) by switching on the automatic device.

11. Process for operating the braking device according to at least one of claims 1 to 7 or 10, **characterised in that** in a vehicle equipped with an automatic speed device, the first sensor (4) is activated by switching on the automatic device.

12. Process for operating the braking device according to claim 11, **characterised in that** an automatic braking procedure is triggered by corresponding braking pressure greater than the brake pedal position if, with the aid of the first sensor (4) and optionally a further speed sensor, a predetermined minimum speed of the movement of the driver's foot (panic speed) and, with the aid of a force sensor (3), an actuation force of predetermined minimum size (panic force) on the brake pedal (2) coincide within a predetermined time (panic time).

13. Process according to claim 12, **characterised in that** the automatic braking procedure is also triggered in the event of restrained initiation of actuation of the brake if the actuation force of predetermined size is still being registered within the predetermined time.

## Revendications

1. Dispositif de freinage d'un véhicule qui comporte une pédale d'accélérateur (1) ainsi qu'une pédale de frein (2), comportant un système de commande de frein (12) pour déclencher automatiquement un processus de freinage en fonction d'un dépassement, déterminé à l'aide d'un dispositif de détection (10), d'une vitesse minimale prédéterminée du déplacement du pied du conducteur, le dispositif de détection (10) comportant un premier capteur (4) positionné dans la zone située entre la pédale d'accélérateur (1) et la pédale de frein (2) et servant à détecter le pied (6) du conducteur, **caractérisé en ce que** le premier capteur (4) possède un champ de vision (5), qui doit être traversé par le pied (6) du conducteur pour son trajet de déplacement (7) depuis une position de repos du pied jusqu'à la pédale de frein (2), et des moyens (13 à 15) couplés au dispositif de détection (10) pour mesurer directement la vitesse d'un déplacement du pied du conducteur en direction de la pédale de frein (2).

2. Dispositif de freinage selon la revendication 1, **caractérisé en ce que** le champ de vision (5) englobe une première position de mesure (15), qu'il est prévu, dans une seconde position de mesure, un second capteur (3) couplé au dispositif de détection (10), de préférence un capteur de vitesse, et que le dispositif de détection (10) comporte des moyens pour mesurer la durée ou la vitesse d'un déplacement du pied (6) du conducteur depuis la première position de mesure jusqu'à la seconde position de mesure.

3. Dispositif de freinage selon la revendication 1, **caractérisé en ce que** des moyens sont prévus pour déterminer une vitesse ou une force d'actionnement de la pédale de frein (2), auquel cas pendant une manoeuvre de freinage, le processus de freinage automatique est déclenché lorsque la vitesse ou la force d'actionnement de la pédale de frein (2) dépasse une valeur de seuil prédéterminée.

4. Dispositif de freinage selon la revendication 2 ou 3, **caractérisé en ce que** la seconde position de mesure est prévue sur la pédale de frein (2).

5. Dispositif de freinage selon la revendication 3, **caractérisé en ce qu'**un capteur de force, notamment un interrupteur à pression, en tant que moyen de mesure servant à déterminer la force d'actionnement agissant sur la pédale de frein (2) est associé à la pédale de frein (2) et/ou à un dispositif de freinage devant être actionné par la pédale.

6. Dispositif de freinage selon l'une des revendications 1 à 5, **caractérisé en ce que** le premier capteur (15) est agencé sous la forme d'un transmetteur de déplacement, d'un capteur de balayage, d'un appareil de prise de vues ou d'un détecteur à radar.

7. Dispositif de freinage selon la revendication 2, **caractérisé en ce que** le deuxième capteur (3) est agencé sous la forme d'un feu-stop couplé à la pédale de frein (2).

8. Dispositif de freinage selon l'une des revendications précédentes, **caractérisé en ce que** le premier capteur (4) est activé au bout d'un intervalle de temps pouvant être prédéterminé.

9. Dispositif de freinage selon la revendication 8, **caractérisé en ce que** la détection de la durée pouvant être prédéterminée commence avec l'écartement du pied du conducteur à partir de la pédale d'accélérateur.

10. Dispositif de freinage selon au moins l'une des revendications 1 à 7, **caractérisé en ce que** le premier capteur (4) et un dispositif de régulation automatique de vitesse prévu dans le véhicule doivent être couplés dans le sens de l'activation du premier capteur (4) par activation du dispositif automatique.

11. Procédé pour faire fonctionner le dispositif de freinage selon au moins l'une des revendications 1 à 7 ou 10, **caractérisé en ce que** dans le cas d'un véhicule équipé d'un dispositif automatique de régulation de la vitesse, le premier capteur (4) est activé par activation du dispositif automatique.

12. Procédé pour faire fonctionner le dispositif de freinage selon la revendication 11, **caractérisé en ce qu'**un processus automatique de freinage est déclenché avec une pression de freinage supérieure à celle qui correspond à la position de la pédale de frein, lorsqu'une vitesse minimale prédéterminée de déplacement du pied du conducteur (vitesse de panique) détectée à l'aide du premier capteur de vitesse (4) et éventuellement d'un autre capteur de vitesse, et une force d'actionnement ayant une grandeur minimale prédéterminée (force de panique) détectée au niveau de la pédale de frein (2) à l'aide d'un capteur de force (3) coïncident pendant un intervalle de temps prédéterminé (temps de panique).

13. Procédé selon 1a revendication 12, **caractérisé en ce que** le processus de freinage automatique est déclenché également lors du comportement au début de l'actionnement des freins, lorsque la force d'actionnement ayant une intensité prédéterminée est encore enregistrée pendant l'intervalle de temps prédéterminé.
